# EUROPEAN PATENT APPLICATION

(11) **EP 0 528 630 A2**
(43) Date of publication of application: **24.02.1993**
(21) Application number: 92307370.4
(22) Date of filing: 12.08.1992
(51) Int. Cl.: G06K 7/10

(54) **Optical scanner apparatus**

(30) Priority: 15.08.1991 US 745310
(71) Applicant: NCR INTERNATIONAL INC., Dayton, Ohio 45479 (US)
(72) Inventor: Doing, Park, Ithaca, New York 14850 (US)
(74) Representative: Robinson, Robert George

(57) **Abstract**

Optical scanner apparatus (20) for scanning a bar code is disclosed and includes a motor driven hollow drive shaft (32) through which a laser light beam is projected from a laser light source (42) positioned adjacent one end of the drive shaft (32). Mounted on the other end of the drive shaft (32) is an optical transceiver (34) which is reciprocally rotated through an angle of 180 degrees and includes a deflecting portion (36) which deflects light beams outwardly toward a deflecting mirror (44) which is also reciprocally rotatable for movement through an angle of 180 degrees. The light reflected from the deflecting mirror (44) forms a scanning pattern for scanning a coded indicia comprising a parallel series of horizontal scan lines (53) which extend in a vertical direction.

## Description

The present invention relates to an optical scanning device.

Such a device is commonly employed as a bar code scanner in merchandising point-of-sale checkout systems. In known systems, data pertaining to the purchase of the merchandise item is obtained by reading data encoded indicia such as a bar code label printed on or attached to the purchased merchandise item. Reading systems which have been constructed to read this type of bar code include stationary optical scanning systems normally located within the cabinet structure of a checkout counter or hand-held laser scanners which emit single or multiple line scan patterns which are manually moved past the bar code label that is to be read. In prior scanning systems, the scan pattern is generated by deflecting a number of scanning light beams by means of a plurality of pattern mirrors. The number of scanning lines in the scan pattern is determined by the number of scanning beams which are generated and by the number of pattern mirrors utilized. A greater number of lines in the pattern will produce a more efficient scanning pattern operation. In order to standardize the bar codes used in various point-of-sale checkout systems, the grocery industry has adapted a uniform product code (UPC) which has a predetermined height and width. Known scanners, for example that disclosed in US 4 816 661 generate scan patterns which scan UPC bar code labels. Where the merchandise items are of such a size that they can't accommodate the standard UPC bar code label, such as gum, the size of the bar code labels has been altered to accommodate such merchandise items. Such bar code labels have dimension of height and width which vary from those of the standard UPC label, thereby presenting problems in reading such labels. In other instances, labels have been stacked, one upon the other, which also has presented problems in reading such labels.

It is therefore an object of the present invention to provide an optical scanner device which generates a scan pattern which can accurately scan bar code labels of different sizes and which is simple in construction and low in cost.

In accordance with the present invention, there is provided optical scanner apparatus comprising a source of light beams, means for directing said light beams along a first light path, and deflecting means rotatably mounted in said first light path and arranged to be driven so as to deflect the light beams as successive scanning lines along a second light path, characterized by reflecting means rotatably mounted in said second light path and arranged to be driven so as to reflect said successive scanning lines in a spaced and substantially parallel manner along a third light path so as to form a scanning pattern.

The invention is described further hereinafter, by way of example only, with reference to the accompanying drawings in which:
Fig. 1 is a partial side view of a hand-held bar code scanner embodying the present invention;
Fig. 2 is a cut away side view of the upper part of the scanner of Fig. 1 taken on line 2-2;
Fig. 3 is a plan view of a scan pattern for scanning a coded label generated by the scanner of Fig. 1; and
Fig. 4 is a schematic representation of the path of scanning light beams as they scan a coded label and are reflected back towards a detector.

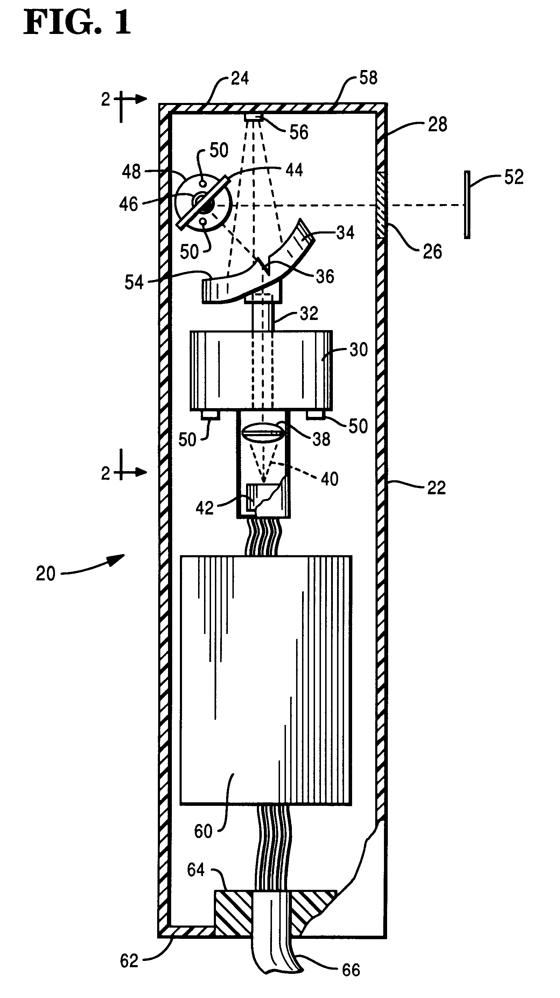

Referring now to Fig. 1, there is shown a hand-held scanner 20 comprising an elongated circular body portion 22 having a front portion 24 which includes a transparent area comprising a glass insert 26 mounted in a side portion 28 of the body 22. Mounted within the body portion 22 is a motor 30 arranged to rotate a hollow drive shaft 32 which extends through the motor 30 and which has mounted on its front end an optical transceiver 34 which includes an inclined surface portion 36. Positioned adjacent the rear end of the drive shaft 32 is a collimating and focusing lens member 38 which receives laser light beams 40 from a laser diode 42. The lens member 38 will collimate and focus the received laser light beams 40 and project the collimated light beams through the hollow drive shaft 32. The light beams 40 will strike the inclined surface portion 36 of the optical transceiver 34 deflecting the light beams out to the side towards a reflecting mirror 44 secured to the drive shaft 46 of a motor 48 mounted to the body portion 22. Both motors 30 and 48 include a pair of Hall sensors 50 which control the angle through-which the motors rotate in a manner that is well known in the art so as to produce pivotal reciprocation of both the optical transceiver 34 and the reflecting mirror 44 through a predetermined angle, for example 180 degrees, of rotation.

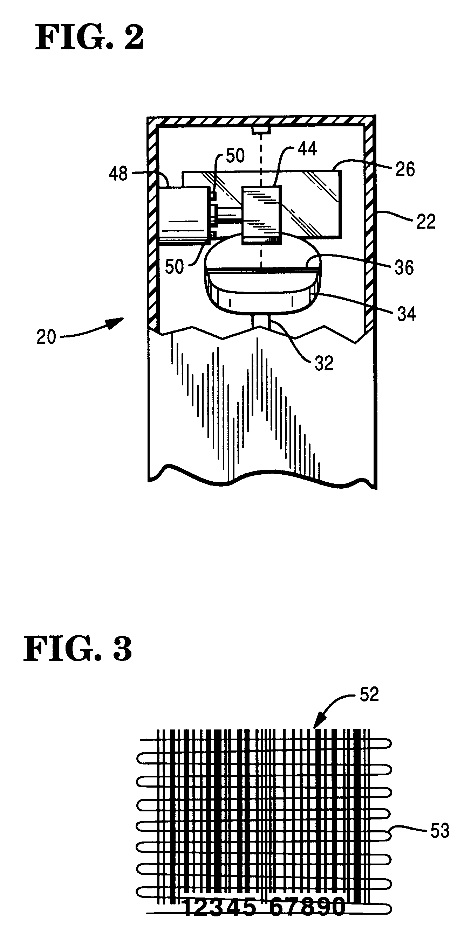

The reflecting mirror 44 will deflect the light beams through the glass insert 26 to scan a bar code label 52 located adjacent the glass insert 26. As best seen in Fig. 3, the bar code label 52 is scanned by a scan pattern comprising a single scanline 53 which sweeps back and forth in a horizontal direction while also being moved in a vertical direction to provide a square scan pattern covering completely the bar code label 52. The horizontal sweeping movement of the scanline 53 is produced by the pivotal reciprocation of the optical transceiver 34 while the vertical movement of the scanline 53 is generated by the pivotal reciprocation of the reflecting mirror 44.

The light beams reflected from the scanned label 52 are redirected towards the reflecting mirror 44 which deflects the reflected light beams towards the concave collection surface 54 of the optical transceiver 34 which in turn deflects the received light beams at a photodetector 56 mounted in the front edge 58 of the front portion 24 of the body portion 22. The photodetector 56 is electrically connected to a printed circuit board 60 mounted within the rear portion of the body portion 22 which contains the processing circuits of the scanning system. Mounted in the rear edge 62 of the body portion 22 is a plug member 64 within which is mounted one end of a cable 66 for supplying power to the printer circuit board 60 and for receiving signals from the processing circuits of the scanning unit for transmission to a remote processor for processing the electrical signals generated by the scanning operation.

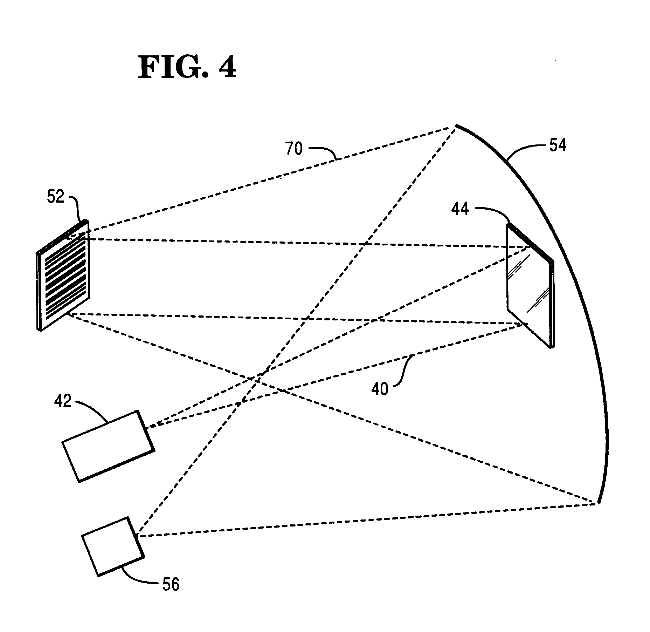

Referring now to Fig. 4 there is shown a schematic representation of the paths of the scanning light beams 40 which are generated by the laser 42 and which are projected through the scanning system at the reflecting mirror 44 which deflects the received light beams towards the bar code label 52. The light beams 70 reflected from the bar code label are directed back towards the concave collecting surface 54 of the optical transceiver 34 which focuses the reflected light beams on the photodetector 56. It will be seen that the scanlines 53 (Fig. 3) generated by the optical scanner of the present invention will effectively scan a high aspect bar code label which is very narrow in length or a number of bar code labels which are stacked upon one another in a vertical direction.

The invention is not restricted to the details of the foregoing embodiment. For example, although only a mirror is disclosed for collecting, deflecting and directing light beams, other types of image forming surfaces may be used such as optical prisms, diffraction surfaces forming a holographic image on a focal plane or any type of conic surfaces such as a parabolic surface.

## Claims

1. Optical scanner apparatus (20) comprising a source (42) of light beams, means (38) for directing said light beams along a first light path, and deflecting means (36) rotatably mounted in said first light path and arranged to be driven so as to deflect the light beams as successive scanning lines along a second light path, characterized by reflecting means (44) rotatably mounted in said second light path and arranged to be driven so as to reflect said successive scanning lines in a spaced and substantially parallel manner along a third light path so as to form a scanning pattern.

2. Apparatus according to claim 1, characterized in that said deflecting means (36) and said reflecting means (44) are rotatable about substantially orthogonal axes.

3. Apparatus according to claim 1 or 2, characterized in that said deflecting means (36) and said reflecting means (44) are mounted for pivotal reciprocation so as to rotate through an angle less than 180 degrees repeatedly.

4. Apparatus according to claim 1, 2 or 3, characterized in that said source (42) light beams is mounted in an elongate housing member 22, drive means are provided comprising a first drive member (30) mounted adjacent said source (42) and a second drive member (48) mounted upstream of said first drive member (30) and adjacent a front end of said housing member (22), in which said first drive member (30) includes a hollow drive shaft (32) having one end positioned adjacent said source (42) for receiving said light beams along said first light path and having said deflecting means (36) secured to the other end thereof for deflecting the light beams outwardly along said second light path, and said reflecting means (44) is driven by said second drive member (48).

5. Apparatus according to any one of the preceding claims, characterized in that said deflecting means (36) comprises an optical transceiver for also collecting light beams reflected from a coded indicia.

6. Apparatus according to any one of the preceding claims, characterized in that said reflecting means (44) comprises a mirror member for deflecting the scanning light beams in a direction which is substantially perpendicular to said first light path.

7. Apparatus according to any one of the preceding claims, characterized by opto-electric detector means (56) for receiving light reflected by a scanned coded indicia.
